# EUROPÄISCHE PATENTSCHRIFT

(11) **EP 0 287 946 B1**
(45) Veröffentlichungstag und Bekanntmachung des Hinweises auf die Patenterteilung: **20.01.1993**
(21) Anmeldenummer: 88105923.2
(22) Anmeldetag: 14.04.1988
(51) Int. Cl.: A23B 7/00, A23B 7/153, A23B 7/16, A01N 65/00

(54) **Keimhemmungsmittel für Kartoffeln**
Germination inhibitor for potatoes
Inhibiteur de germination pour pommes de terre

(30) Priorität: 18.04.1987 DE 3713198
(43) Veröffentlichungstag der Anmeldung: 26.10.1988
(73) Patentinhaber: CELAFLOR GmbH, D-55218 Ingelheim (DE)
(72) Erfinder: Gröschel, Hartmut, Dr., D-6507 Ingelheim/Rhein (DE)
(74) Vertreter: Jung, Elisabeth, Dr.

(56) Entgegenhaltungen:
- FR-A- 1 467 498
- GB-A- 2 184 341
- L. BEZANGER-BEAUQUESNE et al.: "Plantes médicinales des régions tempérées", 1980, Seiten 331-332, Maloine, Paris, FR
- AGRICULTUR & BIOLOGICAL CHEMISTRY, Band 45, 1981, Tokyo, JP; N. KURITA et al.: "Antifungal activity of components of essential oils"

## Beschreibung

Die Erfindung betrifft die Verwendung eines etherischen Öls, gewonnen aus Pflanzen der Gattung Mentha, als Keimhemmungsmittel für Kartoffeln.

Es ist bekannt, die Keimung von Kartoffeln während der Lagerung durch Behandlung der Kartoffeln mit Gammastrahlen oder Chemikalien, wie z.B. Propham oder Chlorpropham, zu hemmen oder zu verhindern. Gegen beide Methoden der Keimhemmung bestehen Bedenken wegen möglicher Gesundheitsschädigung. Es ist zumindest hinderlich, daS z.B. Kartoffeln erst frühestens 42 Tage nach der Behandlung mit Propham gegessen werden dürfen. Ferner ist die Keimhemmung von Kartoffeln mit dem etherischen Öl von Pflanzen der Gattungen Minthostachys und Satureja (Muna-Öl) bekannt. (Ernährung/Nutrition, Vol.9, Nr.4, 1985, 254 bis 256). Da dieses Öl einen hohen Gehalt an dem gesundheitsschädlichen Pulegon aufweist, erscheint seine Verwendung ausgeschlossen.

Gegenstand der vorliegenden Erfindung ist die Verwendung von etherischem Öl aus Menthaarten zur Keimhemmung bei Kartoffeln.

Öle, gewonnen aus Mentha piperita L., sind bevorzugt. Diese Öle, z.B. die von DAB-Qualität (Deutsches Arzneibuch, 9. Ausgabe 1986, Seiten 1151-1152) beziehungsweise PHEUR III (Pharmacapoea Europaea III) oder natürliches Pfefferminzöl, sind als Zusatzstoffe in der Lebensmittel- und Pharmaindustrie seit langem in Verwendung.

Weitere Beispiele für geeignete Öle sind Pfefferminzöl (arvensis-Typ), Krauseminzöl, "Native"-Typ, Krauseminzöl, "Scotch"-Typ und Mentha citrata-Öl.

Die überraschend gute keimhemmende Wirkung von Pfefferminzöl wird durch folgende Versuchsergebnisse belegt:
Kartoffeln der Sorte Clivia wurden trocken, bei 12-15°C während 100 Tagen gelagert.
- Variante A:: Kartoffeln vor Beginn der Lagerung mit Pfefferminzöl (DAB Qualität) besprüht (15 ml/50 kg Kartoffel).
- Variante B:: In die unterste Lage der Kartoffeln eine mit 50 ml Pfefferminzöl gefüllte und mit Drahtsieb abgedeckte Petrischale eingebracht.
- Variante C:: Kartoffeln vor Beginn der Lagerung mit Tixit® (Handelspräparat, Wirkstoff 1% Propham) gestäubt.

### Kontrolle I und II: unbehandelte Kartoffeln

Die Verpackung von Variante A, B, C und Kontrolle I bestand aus Papiertüten in schwarzer Folie. Die Verpackung der Kontrolle II bestand aus einem Korb, der mit Papier abgedeckt war.

### Ergebnis nach 50 Tagen Lagerung:

Variante A und B: Kartoffeln sind fest, zeigen keine Keime. Variante C: Kartoffeln sind fest, zeigen Ansätze von Keimen. Kontrolle I: Kartoffeln geschrumpft, Keime bis zu 8 cm lang. Kontrolle II: Kartoffeln geschrumpft, Keime bis zu 3 cm lang.

Der Geschmack der gekochten Kartoffeln der Varianten A, B und C ist gut. Rückstände des Pfefferminzöls sind nicht feststellbar. Die Kartoffeln der beiden Kontrollen sind für den Genuß nur noch weniger geeignet.

### Ergebnis nach 100 Tagen Lagerung:

- Variante A:: Kartoffeln sind fest, zeigen vereinzelt kürzere Keime bis 1 cm Länge. Zeitpunkt für erneutes Einsprühen, da durch wiederholtes Öffnen der Behältnisse die notwendige Pfefferminzöl-Konzentration in der Lageratmosphäre unterschritten wurde.
- Variante B:: Kartoffeln sind fest, zeigen keine Keime, Öl ist in der Petrischale noch vorhanden.
- Variante C:: Kartoffeln sind fest, keine Veränderung im Vergleich zum Ergebnis nach 50 Tagen.
- Kontrolle I:: Kartoffeln sehr stark geschrumpft, Keime bis zu 20 cm lang, für Verzehr nicht mehr geeignet.
- Kontrolle II:: Kartoffeln geschrumpft, Keime bis zu 25 cm lang, Kartoffeln nur noch bedingt zum Verzehr geeignet.

Das Öl kann in unverdünnter Form oder zusammen mit Trägermaterial auf die Kartoffel aufgebracht werden. Das Öl wird vorzugsweise durch Vernebeln oder Versprühen, gegebenenfalls auch mit einem Trägerstoff, lagenweise auf die Kartoffeln aufgebracht. Ebenso ist eine Applikation möglich, indem das Öl in einem mit Öffnungen versehenen Behältnis in die unterste Schicht der Lagerkartoffeln eingebracht wird. Auch eine Verkapselung des Öls in semipereablem Material, das eine kontinuierliche Freisetzung des Öls erlaubt, ist möglich. Solche Kapseln werden dann zwischen die Kartoffeln gestreut. Weiterhin sind mit dem Öl beladene Schaumstoffpulver eine Möglichkeit, das Mittel zu applizieren. Es ist auch möglich, das Öl mittels der getrockneten Mentha-Blätter einzubringen.

Die Lagerung der Kartoffeln erfolgt unter den üblichen Bedingungen.

Die besten Ergebnisse bei der Kartoffellagerung sind bezüglich der Keimhemmung und Reduzierung des Schrumpfens der Knollen in einer mit Mentha-Öl gesättigten Atmosphäre zu erzielen. Die Lagerbedingungen dürfen daher nur einen geringen Luft- bzw. Gasaustausch erlauben, d.h. die Kartoffeln sind in mit Papier ausgekleideten Foliensäcken o.ä. zu lagern bzw. sind mit Folien abzudecken, nachdem sie vorher mit Papier bedeckt wurden. Diese Maßnahmen sollen das Entweichen der etherischen Öle auf ein Mindestmaß senken, wobei gleichzeitig infolge der höheren Luftfeuchte in dieser Lageratmosphäre die Wasserverluste, d.h. das Schrumpfen der Kartoffeln drastisch reduziert wird. Bei Lagerung in geschlossenen Räumen kann das Abdecken unter Umständen unterbleiben.

Ähnliche Maßnahmen (wie z.B. das Abdecken der Kartoffeln) werden auch bei der Anwendung der handelsüblichen Kartoffelkeimhemmungsmittel empfohlen.

Die stärkste Verzögerung der Keimung der Kartoffeln erzielt man durch Lagerung bei +3°C bis +5°C, wobei die Kartoffeln allerdings süß werden, so daß dies nur für Saatkartoffeln in Frage kommt. Speisekartoffeln werden deshalb bei +6°C bis +8°C und höher gelagert.

Die benötigte Menge des Öles ist von den Lagerungsbedingungen abhängig und liegt im allgemeinen bei 10 bis 20 ml Öl/50 kg Kartoffeln bei einer Lagerdauer von 50 Tagen und etwa der doppelten Menge bei einer Lagerungsdauer von 100 Tagen und länger, sofern die Lagerunsbedingungen zu geringen Verlusten der etherischen Mentha-Öle führen. Durch größere Aufwandmengen bzw. Nachbehandlung kann auch bei ungünstigen Lagerungsbedingungen eine Keimhemmung über die gesamte Saison erreicht werden.

Von besonderem Vorteil ist die Tatsache, daß bei nachlassender Wirkung von Keimhemmungsmitteln jeglicher Art durch eine Behandlung bzw. Nachbehandlung mit Mentha-Öl eine bereits eingesetzte Keimung wieder gestoppt bzw. unterbrochen werden kann, ohne daß eine Wartezeit zwischen Behandlung und Verkauf bzw. Verzehr eingehalten werden muß, wie dies bei den handelsüblichen synthetischen Kartoffelkeimhemmungsmitteln der Fall ist.

Da die Keime der Kartoffeln durch die Behandlung mit Mentha-Öl nicht dauerhaft geschädigt werden, können auch Saatkartoffeln wie beschrieben behandelt werden.

## Patentansprüche

1. Verwendung des etherischen Öls, gewonnen aus einer Mentha-Art, zur Keimhemmung bei Kartoffeln.

2. Verwendung nach Anspruch 1, dadurch gekennzeichnet, daß das Öl Mentha piperita-Öl ist.

3. Verwendung nach den Ansprüchen 1 und 2, dadurch gekennzeichnet, daß das etherische Öl in einer Menge von 10 bis 20 ml je 50 kg Kartoffeln bei einer Lagerdauer von 50 Tagen angewendet wird.

## Claims

1. Use of the essential oil derived from a species of Mentha for the inhibition of germination of potatoes.

2. Use according to claim 1, characterized in that the oil is the oil of Mentha piperita.

3. Use according to claims 1 and 2 , characterized in that the essential oil is used in an amount from 10 to 20 ml per 50 kg of potatoes for a storage time of 50 days.

## Revendications

1. Emploi de l'huile essentielle tirée d'une sorte de Mentha comme inhibiteur de germination pour pommes de terre.

2. Emploi suivant la revendication 1 caractérisé en ce que l'huile est huile de la Mentha piperita.

3. Emploi suivant les revendications 1 et 2, caractérisé en ce que l'huile essentielle est employée dans une quantité de 10 à 20 ml par 50 kg de pommes de terre pour une durée de magasinage de 50 jours.
